# FASCICULE DE BREVET EUROPEEN

(11) **EP 3 820 673 B1**
(45) Date de publication et mention de la délivrance du brevet: **26.07.2023**
(21) Numéro de dépôt: 19755956.0
(22) Date de dépôt: 02.07.2019
(51) Int. Cl.: B29C 63/02

(54) **MACHINE ET PROCEDE DE PELLICULAGE DES DEUX FACES D'UNE PIECE**
MASCHINE UND VERFAHREN ZUM LAMINIEREN VON ZWEI FLÄCHEN EINES TEILS
MACHINE AND METHOD FOR LAMINATING TWO FACES OF A PART

(30) Priorité: 11.07.2018 FR 1856370
(43) Date de publication de la demande: 19.05.2021
(73) Titulaire: WALCO, 69330 Meyzieu (FR)
(72) Inventeur: MILIOTI, Stéphane, 69740 Genas (FR)
(74) Mandataire: Cabinet Beau de Loménie
(86) Numéro de dépôt international: PCT/FR2019/051629
(87) Numéro de publication internationale: WO 2020/012089

(56) Documents cités:
- EP-A1- 1 884 346
- FR-A1- 2 852 553
- FR-B1- 2 852 553
- US-B1- 9 186 876

## Description

L'objet de l'invention concerne le domaine technique du pelliculage visant à protéger par des films de protection, des pièces planes au sens général déplacées selon un trajet horizontal.

L'objet de l'invention trouve des applications particulièrement avantageuses dans le domaine de l'industrie verrière du bâtiment et en particulier pour protéger le vitrage des portes et des fenêtres à l'aide d'un film de protection temporaire.

Dans le domaine de l'industrie verrière du bâtiment, il apparaît le besoin de protéger les vitrages en sortie de la ligne de fabrication sans altérer la productivité sur la ligne de fabrication. La protection des vitrages par un film nécessite d'appliquer le film en retrait par rapport à ses bords pour éviter qu'il se retrouve pincé entre le vitrage et son support puisqu'un tel vitrage est destiné à être encastré selon son périmètre, dans une feuillure des portes ou des fenêtres. De manière complémentaire, la technique de fabrication des vitres conduit à les fabriquer en continu avec des dimensions différentes. La technique de pelliculage doit donc s'adapter aux différentes tailles des vitres. Enfin, pour des raisons de gain de place, la machine de pelliculage doit présenter un encombrement limité tout en s'intégrant au mode de manipulation verticale des vitres en sortie de fabrication.

Pour assurer le pelliculage de vitres, le brevet FR 2 852 553 a proposé une machine comportant une structure de support et de transfert successif des vitres à protéger, permettant d'amener à défiler en position verticale, les vitres devant un ensemble applicateur de films. Cet ensemble comprend au moins un axe sur lequel des bobines de film sont montées de telle sorte que l'amorce des films vienne s'appliquer contre une face de la vitre lors du transfert de celle-ci. Certaines des bobines sont ajustables en hauteur pour former sur chaque vitre, avec l'ensemble des bobines, un revêtement en laizes recouvrant la surface prévue de la vitre. L'amorce de chaque film est maintenue en position à l'aide d'une buse d'aspiration tandis que chaque film est découpé à l'aide d'un film chauffant.

Ce brevet décrit l'application de films en laizes sur uniquement une face de la vitre. L'opération de pelliculage des deux faces de la vitre par une telle machine n'est donc pas optimisée. Par ailleurs, il apparaît que le maintien du film par aspiration, ne permet pas d'obtenir un positionnement précis et correct du film sur la vitre.

Dans le domaine technique de l'application de films de protection, la demande de brevet FR 3 053 662 décrit une machine industrielle d'application de films de protection temporaire ou permanent comportant un module de pelliculage doté d'un rouleau applicateur qui lamine le film de protection sur la pièce à protéger déplacée en translation. Ce rouleau applicateur coopère avec une barre de charges électrostatique connectée à un générateur de charges électrostatiques permettant au film d'adhérer au rouleau applicateur. Ce module de pelliculage comporte également un module de coupe destiné à couper le film en contact avec le rouleau applicateur.

Ce module de pelliculage est déplacé par un vérin permettant de positionner le film porté par le rouleau applicateur au niveau du bord avant de la pièce. En fonction de la position du bord arrière de la pièce, le module de coupe découpe le film, à l'endroit du film correspondant au bord arrière de la pièce. Cette machine permet de protéger la pièce d'un bord à l'autre par un film, sans présenter de chutes de matière. Un tel document ne décrit pas l'application de films sur les deux faces d'une pièce et permettant de s'adapter à des pièces présentant des dimensions différentes.

La présente invention vise à remédier aux inconvénients de l'art antérieur en proposant un procédé pour protéger en même temps, les deux faces d'une pièce par des films, et conçu pour optimiser la durée de l'opération de pelliculage tout en assurant un positionnement précis et efficace des films sur la pièce quelles que soient les dimensions de la surface à recouvrir.

Pour atteindre cet objectif, l'objet de l'invention concerne un procédé de pelliculage par des films de protection déposés à l'aide d'unités d'application, sur une première et une deuxième faces d'une pièce plane déplacée selon un trajet horizontal et présentant chacune une surface à recouvrir possédant une hauteur déterminée à recouvrir entre un bord inférieur et un bord supérieur de la pièce et une longueur déterminée à recouvrir déterminée entre un bord avant et un bord arrière de la pièce et délimitée respectivement par une bordure avant et une bordure arrière.

Selon l'invention, le procédé consiste :
- à disposer en série sur le trajet horizontal d'une première face de la pièce, plusieurs premières unités d'application et en série sur le trajet horizontal de la deuxième face de la pièce, plusieurs deuxièmes unités d'application positionnées chacune en vis-à-vis d'une première unité d'application située sur la première face ;
- à placer les premières unités d'application et les deuxièmes unités d'application dans des positions verticales différentes telles que l'application combinée avec chevauchement des films de protection sur chacune des faces de la pièce corresponde à la hauteur à recouvrir ;
- à appliquer au fur et à mesure du trajet horizontal de la pièce, à l'aide des premières unités d'application et des deuxièmes unités d'application, les films de protection respectivement sur la première face et sur la deuxième face de la pièce, à partir de la bordure avant de la surface à recouvrir et sur la longueur de la surface à recouvrir pour assurer un pelliculage simultané des deux faces de la pièce ;
- et à découper successivement en fonction du trajet horizontal de la pièce, à l'aide des premières et deuxièmes unités d'application, les films de protection au niveau de la bordure arrière de la longueur à recouvrir.

De plus, le procédé selon l'invention peut mettre en oeuvre en combinaison au moins l'une et/ou l'autre des caractéristiques additionnelles suivantes :
- à disposer pour chaque unité d'application, d'un tambour d'application d'un film et à positionner chaque tambour d'application d'une première unité en vis-à-vis d'un tambour d'application d'une deuxième unité ;
- à appliquer au fur et à mesure du trajet horizontal de la pièce, à l'aide des unités d'application, les films de protection sur la face de la pièce, à partir de la bordure avant séparée du bord avant de la pièce, d'une marge ;

- à découper successivement en fonction du trajet horizontal de la pièce, à l'aide des unités d'application, les films de protection au niveau de la bordure arrière séparée du bord arrière de la pièce, d'une marge ;
- à assurer le déplacement de la pièce selon le trajet horizontal à l'aide de divers systèmes de duo de rouleaux disposés de part et d'autre de la pièce et positionnés en amont de chaque unité d'application et en aval de la dernière unité d'application placée sur le trajet horizontal de la pièce ;
- à maintenir par charges électrostatiques, chaque film en contact avec un tambour d'application après sa découpe et jusqu'à son application sur la pièce.

Un autre objet de l'invention est de proposer une machine pour protéger les deux faces d'une pièce par des films, conçue pour optimiser la durée de l'opération de pelliculage tout en assurant un positionnement précis et efficace des films sur la pièce quelque soient les dimensions de la surface à recouvrir.

Selon l'invention, la machine comporte :
- un système de convoyage d'une pièce à pelliculer, dans une position dressée verticale selon un trajet horizontal ;
- plusieurs premières unités d'application de films disposées en série sur le trajet horizontal d'une première face de la pièce et étant chacune déplacée verticalement par un organe moteur, chaque première unité d'application comportant au moins un tambour d'application d'un film déplacé en rapprochement écartement par rapport à la pièce par un organe motorisé de pelliculage, un module de coupe étant monté pour découper le film positionné sur le tambour ;
- plusieurs deuxièmes unités d'application disposées en série sur le trajet horizontal de la deuxième face de la pièce, positionnées chacune en vis-à-vis d'une première unité d'application située sur la première face, chaque deuxième unité d'application étant déplacée verticalement par un organe moteur et comportant au moins un tambour d'application d'un film déplacé en rapprochement écartement par rapport à la pièce par un organe motorisé de pelliculage, un module de coupe étant monté pour découper le film positionné sur le tambour ;

- un système de détection des positions du bord avant, du bord arrière et du bord supérieur de la pièce par rapport aux tambours d'application ;
- une unité de calcul et de commande reliée au système de convoyage, au système de détection, aux organes moteurs de déplacement des tambours, aux modules de coupe, cette unité déterminant en fonction de la hauteur de la surface à recouvrir de la pièce et des largeurs des films, la position verticale des tambours d'application des films de protection, cette unité étant conçue pour piloter les organes moteurs des tambours pour placer les tambours dans des positions verticales telles que l'application combinée avec chevauchement des films de protection sur chacune des faces de la pièce corresponde à la hauteur de la surface à recouvrir, l'unité pilotant en fonction de la position du bord avant de la pièce, consécutivement les organes motorisés de pelliculage, au fur et à mesure du trajet horizontal de la pièce, de manière à appliquer simultanément les films de protection sur chaque face de la pièce, à partir de la bordure avant de la surface à recouvrir, l'unité pilotant en fonction de la position du bord arrière de la pièce, consécutivement les modules de coupe, au fur et à mesure du trajet horizontal de la pièce, afin de découper les films de protection au niveau de la bordure arrière de la surface à recouvrir.

De plus, la machine selon l'invention peut comporter en outre en combinaison au moins l'une et/ou l'autre des caractéristiques additionnelles suivantes :
- des systèmes de prise en charge comportant notamment divers systèmes de duo de rouleaux disposés de part et d'autre de la pièce et positionnés en amont de chaque paire d'unité d'application et en aval de la dernière paire d'unité d'application placée sur le trajet horizontal de la pièce ;
- chaque unité d'application comporte en association de chaque tambour d'application, une barre de charges électrostatiques pilotée pour maintenir chaque film en contact avec un tambour d'application après sa découpe et jusqu'à son application sur la pièce ;
- pour au moins une paire d'unités d'application disposées en vis-à-vis, un système de verrouillage pour bloquer transversalement, un tambour en position d'application d'un film.

Diverses autres caractéristiques ressortent de la description faite ci-dessous en référence aux dessins annexés qui montrent, à titre d'exemples non limitatifs, des formes de réalisation de l'objet de l'invention.
La **Figure 1** est une vue en élévation d'un exemple de réalisation d'une machine d'application conforme à l'invention.
La **Figure 2** est une vue schématique de dessus montrant la configuration d'une machine d'application conforme à l'invention.
La **Figure 3** est une vue d'un exemple de réalisation d'une unité d'application dite arrière faisant partie d'une machine d'application conforme à l'invention.

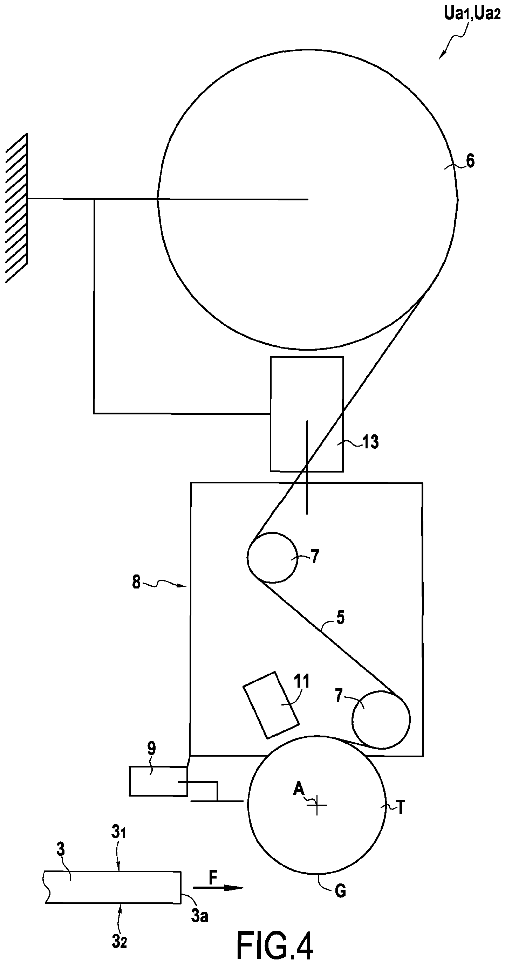

La **Figure 4** est une vue d'un exemple de réalisation d'une unité d'application dite avant faisant partie d'une machine d'application conforme à l'invention.

Tel que cela ressort des **Figures,** l'objet de l'invention concerne une machine **1** de pelliculage conforme à l'invention comportant un châssis **2** de support et de transfert pour des pièces planes **3** telles que des vitrages au sens général. Cette machine **1** comporte un système **4** de convoyage des pièces **3,** dans une position dressée verticale selon un trajet horizontal représenté par la flèche **F.** En pratique, les pièces **3** sont inclinées vers l'arrière d'un angle de l'ordre de 6° par rapport à la verticale.

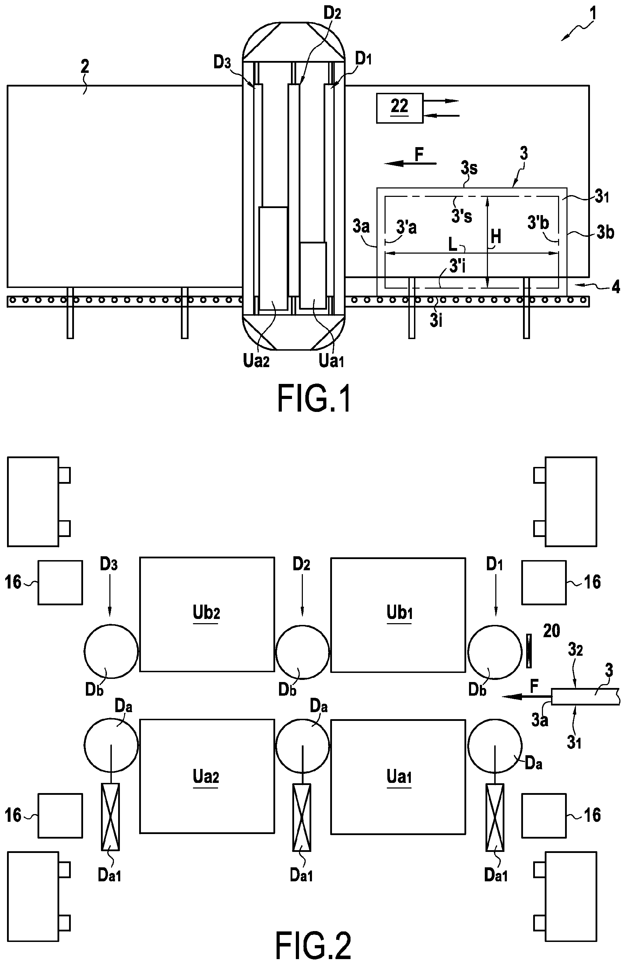

Tel que cela ressort plus précisément de la **Fig. 1****.,** chaque pièce plane **3** présente une première face **3₁** dite avant et une deuxième face **3₂** dite arrière et possède en considération de la position dressée de convoyage, un bord inférieur **3i,** un bord supérieur **3s,** un bord avant **3a** et un bord arrière **3b** en considération du sens de convoyage de la pièce. Chaque face de la pièce **3** présente une surface à recouvrir par les films, possédant d'une part, une hauteur **H** déterminée délimitée entre le bord inférieur **3i** et le bord supérieur **3s** de la pièce et d'autre part, une longueur déterminée **L** entre le bord avant **3a** et le bord arrière **3b.** Cette surface à recouvrir est ainsi délimitée par des bordures avant **3'a,** arrière **3'b,** inférieure **3'i** et supérieure **3's** s'étendant en relation respectivement des bords avant, arrière, inférieure et supérieure de la pièce. Selon une variante avantageuse de réalisation pour laquelle la pièce est un vitrage pour portes ou fenêtres, la hauteur **H** et la longueur **L** de la surface à recouvrir par les films sont inférieures respectivement à la hauteur et la largeur de la pièce pour laisser subsister à la périphérie de la pièce, une marge non recouverte par les films et destinée à être encastrée dans la feuillure des portes ou fenêtres. Bien entendu, l'objet de l'invention permet l'application des films sans marge par rapport aux bords de la pièce.

Le système de convoyage **4** déplace en translation les pièces **3** en appui par leur bord inférieur **3i** selon un plan de référence, de manière à amener successivement les pièces en vis-à-vis d'unités d'application de films montées de manière fixe par rapport au mouvement de translation des pièces.

Conformément à l'invention, cette machine de pelliculage **1** comporte plusieurs premières unités d'application de films **Ua1, Ua2,** ... disposées en série sur le trajet horizontal de la première face **3₁** de la pièce. Les premières unités d'application dites avants **Ua1, Ua2,** ... sont au nombre de deux dans l'exemple illustré mais la machine peut comporter un nombre supérieur d'unités d'application de films. En considération du sens de déplacement des pièces, les premières unités d'application sont désignées **Ua1** et **Ua2.**

Conformément à l'invention, cette machine de pelliculage **1** comporte également plusieurs deuxièmes unités d'application de films **Ub1, Ub2,** ... disposées en série sur le trajet horizontal de la deuxième face **3₂** de la pièce. Chaque deuxième unité d'application de films est positionnée en vis-à-vis d'une première unité d'application située sur la première face. Les deuxièmes unités d'application dites arrières **Ub1, Ub2,** ... sont au nombre de deux dans l'exemple illustré mais la machine peut comporter un nombre supérieur d'unités d'application de films. En considération du sens de déplacement des pièces, les deuxièmes unités d'application sont désignées **Ub1** et **Ub2.** Tel que cela ressort de la **Fig. 2****,** la machine **1** comporte des paires d'unités d'application et dans l'exemple illustré, en considération du trajet de la pièce, une première paire d'unités d'application **Ua1-Ub1** et une deuxième paire d'unités d'application **Ua2-Ub2.** Chacune de ces paires est formée d'une unité d'application avant et d'une unité d'application arrière, les paires étant disposées successivement sur le trajet de la pièce. Les unités d'application d'une même paire fonctionnent de manière symétrique pour l'application des films sur la première face **3₁** et sur la deuxième face **3₂**. En d'autres termes, les unités d'application avant et arrière d'une même paire réalisent des opérations identiques simultanément de manière que les contraintes imposées à la pièce soient symétriques.

La machine **1** comporte des systèmes de prise en charge **D1, D2, D3** des pièces, positionnés en amont de chaque paire d'unité d'application et en aval de la dernière paire d'unités d'application placée sur le trajet de la pièce. Dans l'exemple de réalisation illustré sur les dessins, la machine **1** comporte trois systèmes de prise en charge à savoir en considération du trajet de la pièce **3,** un premier système de prise en charge dit introducteur **D1,** un deuxième dit intermédiaire **D2** et un troisième dit éjecteur **D3.**

Chaque système de prise en charge **D1, D2, D3** comporte un duo de rouleaux **Da, Db** disposés de part et d'autre de la pièce **3.** L'un des rouleaux par exemple **Da** est monté déplaçable transversalement par rapport au trajet de la pièce par un vérin **Da1** et par rapport à l'autre rouleau **Db** monté fixe mais motorisé en rotation par un moteur non représenté. Le duo de rouleaux placés en amont de chaque paire d'unités d'application assure ainsi l'introduction de la pièce dans les unités d'applications situées en aval. Le duo de rouleaux placés en aval de la dernière paire d'unités d'application (**Ua2-Ub2** dans l'exemple) placée sur le trajet de la pièce **3** assure ainsi l'éjection de la pièce des unités d'application amont.

Chaque unité d'application **Ua1, Ua2, Ub1** et **Ub2** comporte notamment un tambour d'application **T** d'un film **5** issu d'une bobine fixe **6** et coopérant avec des contre rouleaux **7** pour optimiser son contact avec le tambour d'application. Chaque tambour d'application **T** est positionné de manière que son axe de rotation **A** soit parallèle aux faces de la pièce. Chaque tambour d'application **T** est supporté par une tête mobile **8** pourvue d'un module de coupe **9** monté pour découper le film positionné sur le tambour. Typiquement, chaque module de coupe **3** comporte avantageusement une lame de coupe déplaçable selon une génératrice du tambour d'application et coupant le film en contact avec le tambour d'application **T.** Chaque tête mobile **8** est équipée d'une barre de charges électrostatiques **11** reliée à un générateur de charges électrostatiques et pilotée pour maintenir chaque film en contact avec le tambour d'application après sa découpe et jusqu'à son application sur la pièce.

Chaque tambour d'application **T** est déplacé en rapprochement écartement par rapport à la pièce **3,** à l'aide d'un organe motorisé de pelliculage **13.** Plus précisément, chaque organe motorisé de pelliculage **13** est monté pour agir sur la tête mobile **8** supportant notamment un tambour d'application **T.** Les organes motorisés de pelliculage **13** appartenant à chacune des paires d'unités d'application sont pilotés de manière que chaque paire de tambours **T** placés en opposition, occupent soit une position rapprochée de laminage ou de pelliculage de la pièce soit une position écartée pour l'introduction de la pièce. Les tambours d'application de chaque paire d'unités d'application sont positionnés de manière symétrique de part et d'autre des faces de la pièce **3** afin d'équilibrer les pressions exercées sur la pièce.

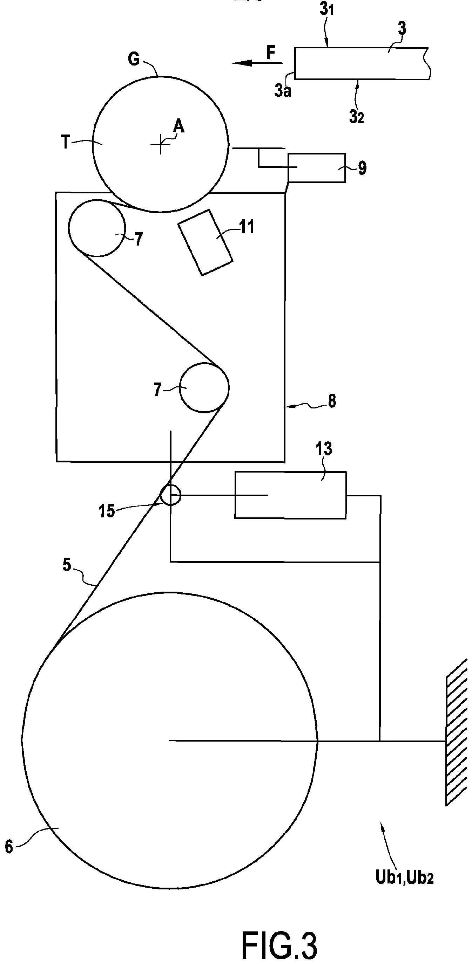

Selon une caractéristique avantageuse de réalisation, la machine **1** comporte pour au moins une paire d'unités d'application **Ua1-Ub1, Ua2-Ub2** disposées en vis-à-vis, un système de verrouillage **15** pour bloquer transversalement, un tambour **T** en position d'application d'un film. Tel que cela ressort plus précisément de la **Fig. 3****,** chaque unité d'application arrière **Ub1**, **Ub2** comporte un système de verrouillage **15** du type à genouillère permettant de bloquer en position transversale fixe, le tambour **T** de chaque unité d'application arrière. Le tambour de chaque unité d'application arrière confère une position de référence à la paire de tambours. Chaque tambour d'une unité d'application avant **Ua1, Ua2** est déplacé par un vérin comportant une régulation de pression. Le tambour de l'unité d'application avant est en position lorsque la pression de consigne est atteinte, cette valeur de pression s'adaptant à l'épaisseur de la pièce **3.**

Selon une caractéristique de l'invention, chaque unité d'application **Ua1, Ua2, Ub1** et **Ub2** est montée mobile verticalement à l'aide d'un organe moteur **16** tel qu'une vis à bille motorisée. Ainsi, les tambours d'application **T** d'une même série d'unités d'application peuvent être placés dans des positions verticales différentes telles que l'application combinée avec chevauchement des films de protection sur une face de la pièce corresponde à la hauteur **H** de la surface à recouvrir. Bien entendu, la hauteur cumulée des hauteurs des films équipant les deux tambours d'application appartenant à une même série d'unités d'application est supérieure à la hauteur **H** de la surface à recouvrir. Le degré de chevauchement des deux films dépend de la différence entre la hauteur cumulée des films et la hauteur **H** de la surface à recouvrir.

Selon une caractéristique de l'invention, la machine comporte un système de détection **20** des positions du bord avant **3a,** du bord arrière **3b** et du bord supérieur **3s** de la pièce par rapport aux tambours d'application **T.** Ce système de détection **20** met en oeuvre divers capteurs de position, adaptés pour permettre de positionner correctement les films sur les faces de la pièce au niveau de la surface à recouvrir.

Selon une autre caractéristique de l'invention, la machine **1** comporte une unité de calcul et de commande **22** permettant de piloter les éléments constitutifs de la machine permettant d'assurer l'opération de pelliculage de chaque pièce. Cette unité de calcul et de commande **22** est réalisée de toute manière appropriée comme sous la forme d'un automate programmable ou d'un ordinateur. Cette unité de calcul et de commande **22** est reliée au système de convoyage **4,** au système de détection **20,** aux organes moteur **16** de déplacement vertical des unités d'application, aux organes motorisé de pelliculage **13** et aux modules de coupe **9.**

Cette unité de calcul et de commande **22** reçoit les informations sur la hauteur des films équipant les tambours d'application **T** ainsi que la marge définie pour chaque pièce **3** entre les bords de la pièce et la surface à recouvrir. Ces informations sont fournies à cette unité **22** par une interface homme machine ou à la suite de la lecture d'une information codée sur la pièce. Cette unité de calcul et de commande **22** qui détecte la position des bords de la pièce et connaît pour chaque pièce **3** la marge, est apte à déterminer la position des bordures de la surface à recouvrir.

L'unité de calcul et de commande **22** connaît par le système de détection **20,** la hauteur de la pièce **3.** Il est à noter que la hauteur de la pièce peut être détectée en détectant uniquement la position du bord supérieur **3s** de la pièce dans la mesure où le bord inférieur **3i** occupe toujours la même position en appui sur le système de convoyage **4.**

L'unité de calcul et de commande **22** détermine en fonction de la hauteur de la pièce **3,** de la marge pour la surface à recouvrir de la pièce et des largeurs des films **5,** la position verticale des tambours d'application des films de protection appartenant à chacune des séries de manière que l'application combinée avec chevauchement des films de protection sur chacune des faces de la pièce corresponde à la hauteur à recouvrir. Ainsi, l'unité de calcul et de commande **22** pilote les organes moteurs **16** des tambours **T** pour placer les tambours dans des positions verticales telles que l'application combinée avec chevauchement des films de protection sur chacune des faces de la pièce corresponde à la hauteur **H** à recouvrir.

L'unité de calcul et de commande **22** pilote en fonction de la position du bord avant **3a** de la pièce, consécutivement les organes motorisés de pelliculage **13,** au fur et à mesure du trajet horizontal de la pièce **3,** de manière à appliquer les films de protection sur chaque face de la pièce, à partir de la bordure avant **3'a** de la surface à recouvrir.

L'unité de calcul et de commande **22** pilote en fonction de la position du bord arrière **3b** de la pièce, consécutivement les modules de coupe **9,** au fur et à mesure du trajet horizontal de la pièce, afin de découper les films de protection au niveau de la bordure arrière **3'b** de la surface à recouvrir.

La machine **1** décrite ci-dessus permet de mettre en oeuvre un procédé automatique de pelliculage en ligne des deux faces de pièces **3** présentant des hauteurs et des longueurs qui varient.

Chaque pièce **3** est déplacée en translation par le système de convoyage **4,** dont le bord avant **3a** est détecté par le système de détection **20** situé en amont du système de prise en charge **D1** placé en amont de la première paire d'unités d'application et appelé système de prise en charge introducteur. Le vérin **Da1** de ce système de prise en charge introducteur **D1** est piloté pour obtenir la fermeture du duo de rouleaux **Da, Db** de ce système pour assurer la translation de la pièce **3** et l'amener à la première paire d'unités d'application à savoir **Ua1-Ub1.**

Par ailleurs, il est à noter que l'unité de calcul et de commande **22** est adaptée pour positionner les unités d'application **Ua1-Ub1** de la première paire afin de respecter la hauteur **H** de la surface à recouvrir de la pièce. La marge avec le bord inférieur **3i** de la plaque étant connue, les organes moteurs **16** des unités d'application **Ua1-Ub1** de la première paire sont pilotés pour placer les tambours d'application **T** de cette première paire de manière que les bords inférieurs des films se retrouvent positionnés au niveau des bordures inférieures **3'i** de la surface à recouvrir.

En fonction de la détection du bord avant **3a** de la pièce, les organes motorisés de pelliculage **13** des unités d'application **Ua1-Ub1** de la première paire sont pilotés en même temps pour placer les tambours d'application **T** de cette première paire de manière que les films supportés par les tambours se trouvent positionnés sur la première face et sur la deuxième face de la pièce, au niveau de la bordure avant **3'a** de la surface à recouvrir. Comme il sera compris de la suite de la description, chaque film adhère au tambour d'application **T** jusqu'à sa génératrice située la plus proche de la pièce c'est-à-dire la génératrice située dans la plan passant par l'axe de rotation **A** du tambour d'application et perpendiculaire au trajet de la pièce **3.** Cette génératrice est appelée génératrice d'application **G** dans la suite de la description.

Le pelliculage simultané des deux faces **3₁**, **3₂** de la pièce par les films des tambours d'application **T** est réalisé lors de poursuite de l'avance de la pièce **3.** L'arrivée du bord avant **3a** de la pièce en amont de la deuxième paire d'unités d'application **Ua2-Ub2** est détectée par le système de détection **20** situé en amont du système de prise en charge **D2** placé en amont de la deuxième paire d'unités d'application et appelé système de prise en charge intermédiaire. Le vérin **Da1** de ce système de prise en charge intermédiaire **D2** est piloté pour obtenir la fermeture du duo de rouleaux **Da, Db** de ce système pour assurer la translation de la pièce **3** et l'amener à la deuxième paire d'unités d'application à savoir **Ua2-Ub2.**

Il est à noter que l'unité de calcul et de commande **22** est adaptée pour positionner les unités d'application **Ua2-Ub2** de la deuxième paire afin de respecter la hauteur **H** de la surface à recouvrir de la pièce. La marge avec le bord supérieur **3s** de la plaque étant connue, les organes moteurs **16** des unités d'application **Ua2-Ub2** de la deuxième paire sont pilotés pour placer les tambours d'application **T** de cette deuxième paire de manière que les bords supérieurs des films se retrouvent positionnés au niveau des bordures supérieures **3's** de la surface à recouvrir.

En fonction de la détection du bord avant **3a** de la pièce, les organes motorisés de pelliculage **13** des unités d'application **Ua2-Ub2** de la deuxième paire sont pilotés en même temps pour placer les tambours d'application **T** de cette deuxième paire de manière que les films **5** supportés par les tambours se trouvent positionnés sur la première face **3₁** et sur la deuxième face **3₂** de la pièce, au niveau de la bordure avant **3'a** de la surface à recouvrir. Il est rappelé que chaque film adhère au tambour d'application **T** jusqu'à sa génératrice **G** située la plus proche de la pièce c'est-à-dire la génératrice située dans le plan passant par l'axe de rotation **A** du tambour d'application et perpendiculaire au trajet de la pièce **3.**

Le pelliculage simultané des deux faces de la pièce **3** par les films **5** des tambours d'application **T** de la deuxième paire d'unités d'application **Ua2-Ub2** est réalisé lors de poursuite de l'avance de la pièce **3.**

Lors du déplacement de la pièce **3,** le bord avant **3a** de la pièce **3** est détecté par le système de détection **20** situé en amont du système de prise en charge **D3** placé en aval de la deuxième paire d'unités d'application **Ua2-Ub2.** Ce système de prise en charge **D3** dit éjecteur est commandé pour faire avancer la pièce jusqu'à sa sortie de la deuxième paire d'unités d'application. Le vérin **Da1** de ce système de prise en charge éjecteur **D3** est piloté pour obtenir la fermeture du duo de rouleaux **Da, Db** de ce système pour assurer la translation de la pièce **3** et l'amener à sortir de la deuxième paire d'unités d'application **Ua2-Ub2.**

Lors du déplacement de la pièce **3,** le bord arrière **3b** de la pièce **3** est détecté par le système de détection **20** situé en amont du système de prise en charge introducteur **D1** placé en amont de la première paire d'unités d'application **Ua1-Ub1.** Ce système de prise en charge introducteur **D1** est commandé pour faire avancer la pièce dans une position déterminée fixe dans laquelle sera effectuée la découpe des films supportés par les tambours d'application de la première paire d'unités d'application **Ua1-Ub1.** Lorsque la pièce **3** occupe cette position, le déplacement de la pièce est arrêté. Le système de prise en charge introducteur **D1** et le système de prise en charge intermédiaire **D2,** voire le système de prise en charge éjecteur **D3** sont arrêtés.

Dans cette position, la pièce **3** est placée dans une position telle que la distance entre la bordure arrière **3'b** de la surface à recouvrir et la génératrice d'application **G** soit égale au périmètre du tambour d'application **T** pris entre cette génératrice d'application **G** et la génératrice selon laquelle la lame de coupe du module de coupe **9** agit. Ainsi, lorsque la pièce **3** poursuivra son déplacement, l'opération de pelliculage se terminera par la partie du film découpée sur le tambour d'application **T** dont l'extrémité viendra se positionner au niveau de la bordure arrière **3'b** de la surface à recouvrir c'est-à-dire en retrait du bord arrière **3b** selon la marge souhaitée.

Pour ce faire, l'unité de calcul et de commande **22** pilote l'activation de la barre de charges électrostatiques **11** de chaque tambour d'application de cette première paire d'unités d'application **Ua1-Ub1** pour maintenir chaque film **5** en contact avec son tambour d'application. Chaque module de coupe **9** de cette première paire d'unités d'application **Ua1-Ub1** est également commandé par l'unité **22,** pour couper les films en contact sur les tambours. Après la découpe du film, le film reste en contact avec le tambour d'application **T** grâce à l'activation de la barre de charges électrostatiques **11.**

Après la découpe des films, le déplacement de la pièce **3** reprend. Le système de prise en charge introducteur **D1,** le système de prise en charge intermédiaire **D2** et voire le système de prise en charge éjecteur **D3** sont de nouveau mis en marche. Le déplacement de la pièce **3** permet de terminer l'opération de pelliculage par les unités d'application **Ua1-Ub1** de la première paire. Les tambours **T** des unités d'application **Ua1-Ub1** de la première paire sont écartés par les organes motorisés de pelliculage **13** et les barres de charges électrostatiques **11** sont désactivées.

Lors du déplacement de la pièce, le bord arrière **3b** de la pièce **3** est détecté par le système de détection **20** avant son arrivée à la deuxième paire d'unités d'application **Ua2-Ub2.** Les systèmes de prise en charge intermédiaire **D2** et éjecteur **D3** sont commandés pour faire avancer la pièce dans une position déterminée fixe dans laquelle sera effectuée la découpe des films supportés par les tambours d'application **T** de la deuxième paire d'unités d'application **Ua2-Ub2**. Lorsque la pièce **3** occupe cette position, le déplacement de la pièce est arrêté. Le système de prise en charge éjecteur **D3** et le système de prise en charge intermédiaire **D2** sont arrêtés.

Dans cette position, la pièce **3** est placée dans une position telle que la distance entre la bordure arrière **3'b** de la surface à recouvrir et la génératrice d'application **G** soit égale au périmètre du tambour d'application **T** pris entre cette génératrice d'application **G** et la génératrice du tambour selon laquelle la lame du module de coupe **9** agit. Ainsi, lorsque la pièce **3** poursuivra son déplacement, l'opération de pelliculage se terminera par la partie du film découpée sur le tambour d'application **T** dont l'extrémité viendra se positionner au niveau de la bordure arrière **3'b** de la surface à recouvrir c'est-à-dire en retrait du bord arrière selon la marge souhaitée.

La barre de charges électrostatiques **11** de chaque tambour d'application **T** de cette deuxième paire d'unités d'application **Ua2-Ub2** est pilotée pour maintenir chaque film **5** en contact avec son tambour d'application et chaque module de coupe **9** de cette deuxième paire d'unités d'application **Ua2-Ub2** est commandé pour couper les films en contact sur les tambours.

Après la découpe des films **5,** le déplacement de la pièce **3** reprend. Le système de prise en charge éjecteur **D3** et le système de prise en charge intermédiaire **D2** sont de nouveau mis en marche. Le déplacement de la pièce **3** permet de terminer l'opération de pelliculage par les unités d'application **Ua2-Ub2** de la deuxième paire. Les tambours **T** des unités d'application **Ua2-Ub2** de la deuxième paire sont écartés par les organes motorisés de pelliculage **13** et les barres de charges électrostatiques **11** sont désactivées. Le système de prise en charge éjecteur **D3** est arrêté après l'évacuation complète de la pièce de la deuxième paire des unités d'application **Ua2-Ub2.** Un procédé de pelliculage pour une prochaine pièce **3** peut débuter.

Il ressort de la description qui précède que le procédé de pelliculage selon l'invention consiste :
- à disposer en série sur le trajet horizontal de la première face **3₁** de la pièce, plusieurs premières unités d'application **Ua1, Ua2,** ... et en série sur le trajet horizontal de la deuxième face **3₂** de la pièce, plusieurs deuxièmes unités d'application **Ub1, Ub2,** ... positionnées chacune en vis-à-vis d'une première unité d'application située sur la première face ;
- à placer les premières unités d'application **Ua1, Ua2,** ... et les deuxièmes unités d'application **Ub1, Ub2,** ... dans des positions verticales différentes telles que l'application combinée avec chevauchement des films de protection **5** sur chacune des faces de la pièce corresponde à la hauteur à recouvrir ;
- à appliquer au fur et à mesure du trajet horizontal de la pièce, à l'aide des premières unités d'application et des deuxièmes unités d'application, les films de protection respectivement sur la première face et sur la deuxième face de la pièce, à partir de la bordure avant **3'a** de la surface à recouvrir et sur la longueur à recouvrir ;
- et à découper successivement en fonction du trajet horizontal de la pièce, à l'aide des premières et deuxièmes unités d'application, les films de protection au niveau de la bordure arrière **3'b** de la surface à recouvrir.

Le procédé selon l'invention permet d'appliquer au fur et à mesure du trajet horizontal de la pièce **3,** à l'aide des unités d'application, les films de protection **5** sur la face de la pièce, à partir de la bordure avant **3'a** séparée du bord avant **3a** de la pièce, d'une marge. De même, le procédé selon l'invention permet de découper successivement en fonction du trajet horizontal de la pièce **3,** à l'aide des unités d'application, les films de protection au niveau de la bordure arrière **3'b** séparée du bord arrière **3b** de la pièce, d'une marge.

L'invention n'est pas limitée aux exemples décrits et représentés car diverses modifications peuvent y être apportées sans sortir de son cadre.

## Revendications

1. Procédé de pelliculage par des films de protection (**5**) déposés à l'aide d'unités d'application, sur une première (**3₁**) et une deuxième (**3₂**) faces d'une pièce plane (**3**) déplacée selon un trajet horizontal et présentant chacune une surface à recouvrir possédant une hauteur déterminée à recouvrir entre un bord inférieur (**3i**) et un bord supérieur (**3s**) de la pièce et une longueur déterminée (**L**) à recouvrir déterminée entre un bord avant (**3a**) et un bord arrière (**3b**) de la pièce et délimitée respectivement par une bordure avant (**3'a**) et une bordure arrière (**3'b**), le procédé consistant :
• à disposer en série sur le trajet horizontal d'une première face de la pièce, plusieurs premières unités d'application (**Ua1, Ua2,** ...) et en série sur le trajet horizontal de la deuxième face de la pièce, plusieurs deuxièmes unités d'application (**Ub1, Ub2,** ...) positionnées chacune en vis-à-vis d'une première unité d'application située sur la première face ;
• à placer les premières unités d'application (**Ua1, Ua2,** ...) et les deuxièmes unités d'application (**Ub1, Ub2,** ...) dans des positions verticales différentes telles que l'application combinée avec chevauchement des films de protection sur chacune des faces de la pièce corresponde à la hauteur à recouvrir ;
• à appliquer au fur et à mesure du trajet horizontal de la pièce, à l'aide des premières unités d'application et des deuxièmes unités d'application, les films de protection respectivement sur la première face et sur la deuxième face de la pièce, à partir de la bordure avant (**3'a**) de la surface à recouvrir et sur la longueur de la surface à recouvrir pour assurer un pelliculage simultané des deux faces de la pièce ;
• et à découper successivement en fonction du trajet horizontal de la pièce, à l'aide des premières et deuxièmes unités d'application, les films de protection au niveau de la bordure arrière de la longueur à recouvrir.

2. Procédé selon la revendication précédente, **caractérisé en ce qu'**il consiste à disposer pour chaque unité d'application, d'un tambour d'application (**T**) d'un film et à positionner chaque tambour d'application (**T**) d'une première unité en vis-à-vis d'un tambour d'application d'une deuxième unité.

3. Procédé selon l'une des revendications précédentes, **caractérisé en ce qu'**il consiste :
• à appliquer au fur et à mesure du trajet horizontal de la pièce, à l'aide des unités d'application, les films de protection sur la face de la pièce, à partir de la bordure avant (**3'a**) séparée du bord avant (**3a**) de la pièce, d'une marge ;
• et à découper successivement en fonction du trajet horizontal de la pièce, à l'aide des unités d'application, les films de protection au niveau de la bordure arrière (**3'b**) séparée du bord arrière (**3b**) de la pièce, d'une marge.

4. Procédé selon l'une des revendications précédentes, **caractérisé en ce qu'**il consiste à assurer le déplacement de la pièce selon le trajet horizontal à l'aide de divers systèmes (**D1, D2, D3**) de duo de rouleaux disposés de part et d'autre de la pièce et positionnés en amont de chaque unité d'application et en aval de la dernière unité d'application placée sur le trajet horizontal de la pièce.

5. Procédé selon l'une des revendications précédentes, **caractérisé en ce qu'**il consiste à maintenir par charges électrostatiques, chaque film (**5**) en contact avec un tambour d'application après sa découpe et jusqu'à son application sur la pièce.

6. Machine de pelliculage d'une pièce plane (**3**) déplacée selon un trajet horizontal et présentant sur une première et une deuxième faces, une surface à recouvrir possédant une hauteur déterminée (**H**) à recouvrir entre un bord inférieur (**3i**) et un bord supérieur (**3s**) de la pièce et une longueur déterminée L à recouvrir déterminée entre un bord avant (**3a**) et un bord arrière (**3b**) de la pièce et délimitée respectivement par une bordure avant (**3'a**) et une bordure arrière (**3'**b), la machine comportant :
• un système de convoyage (**4**) d'une pièce à pelliculer, dans une position dressée verticale selon un trajet horizontal ;
• plusieurs premières unités d'application (**Ua1, Ua2,** ...) de films disposées en série sur le trajet horizontal d'une première face de la pièce et étant chacune déplacée verticalement par un organe moteur (**16**), chaque première unité d'application comportant au moins un tambour d'application (**T**) d'un film déplacé en rapprochement écartement par rapport à la pièce par un organe motorisé de pelliculage (**13**), un module de coupe (**9**) étant monté pour découper le film positionné sur le tambour ;
• plusieurs deuxièmes unités d'application (**Ub1, Ub2,** ...) disposées en série sur le trajet horizontal de la deuxième face de la pièce, positionnées chacune en vis-à-vis d'une première unité d'application située sur la première face, chaque deuxième unité d'application étant déplacée verticalement par un organe moteur (**16**) et comportant au moins un tambour d'application (**T**) d'un film déplacé en rapprochement écartement par rapport à la pièce par un organe motorisé de pelliculage (**13**), un module de coupe (**9**) étant monté pour découper le film positionné sur le tambour ;
• un système de détection (**20**) des positions du bord avant (**3a**), du bord arrière (**3b**) et du bord supérieur (**3s**) de la pièce par rapport aux tambours d'application (**T**) ;
• une unité de calcul et de commande (**22**) reliée au système de convoyage (**4**), au système de détection (**20**), aux organes moteurs (**16**) de déplacement des tambours (**T**), aux modules de coupe (**9**), cette unité (**22**) déterminant en fonction de la hauteur (**H**) de la surface à recouvrir de la pièce et des largeurs des films, la position verticale des tambours d'application (**T**) des films de protection, cette unité (**22**) étant conçue pour :
- piloter les organes moteurs (**16**) des tambours pour placer les tambours dans des positions verticales telles que l'application combinée avec chevauchement des films de protection sur chacune des faces de la pièce corresponde à la hauteur (**H**) de la surface à recouvrir ;
- piloter en fonction de la position du bord avant (**3a**) de la pièce, consécutivement les organes motorisés de pelliculage (**13**), au fur et à mesure du trajet horizontal de la pièce, de manière à appliquer simultanément les films de protection sur chaque face de la pièce, à partir de la bordure avant (**3'a**) de la surface à recouvrir ;
- piloter en fonction de la position du bord arrière (**3b**) de la pièce, consécutivement les modules de coupe (**9**), au fur et à mesure du trajet horizontal de la pièce, afin de découper les films de protection au niveau de la bordure arrière (**3'b**) de la surface à recouvrir.

7. Machine selon la revendication 6, **caractérisée en ce qu'**elle comporte des systèmes de prise en charge (**D1, D2, D3**) comportant notamment divers systèmes de duo de rouleaux disposés de part et d'autre de la pièce et positionnés en amont de chaque paire d'unité d'application et en aval de la dernière paire d'unité d'application placée sur le trajet horizontal de la pièce.

8. Machine selon les revendications 6 ou 7, **caractérisée en ce que** chaque unité d'application comporte en association de chaque tambour d'application (**T**), une barre de charges électrostatiques (**11**) pilotée pour maintenir chaque film en contact avec un tambour d'application après sa découpe et jusqu'à son application sur la pièce.

9. Machine selon l'une des revendications 6 à 8, **caractérisée en ce qu'**elle comporte pour au moins une paire d'unités d'application disposées en vis-à-vis, un système de verrouillage (**15**) pour bloquer transversalement, un tambour en position d'application d'un film.

## Patentansprüche

1. Verfahren zur Folierung mittels Schutzfolien (5), die mithilfe von Aufbringeinheiten auf einer ersten (3₁) und einer zweiten (3₂) Seitenfläche eines flachen Werkstücks (3) abgelegt werden, das gemäß einer horizontalen Bahn bewegt wird und jeweils eine zu bedeckende Oberfläche aufweist, die eine bestimmte zu bedeckende Höhe zwischen einem oberen Rand (3i) und einem unteren Rand (3s) des Werkstücks sowie eine bestimmte zu bedeckende Länge (L) zwischen einem vorderen Rand (3a) und einem hinteren Rand (3b) des Werkstücks besitzt, die jeweils von einem vorderen Saum (3'a) und einem hinteren Saum (3'b) begrenzt wird, wobei das Verfahren darin besteht:
• auf der horizontalen Bahn einer ersten Seitenfläche des Werkstücks mehrere erste Aufbringeinheiten (Ua1, Ua2, ...) in Reihe anzuordnen, und auf der horizontalen Bahn der zweiten Seitenfläche des Werkstücks mehrere zweite Aufbringeinheiten (Ub1, Ub2, ...) in Reihe anzuordnen, die jeweils einer ersten Aufbringeinheit, die sich auf der ersten Seitenfläche befindet, gegenüberliegend positioniert sind,
• die ersten Aufbringeinheiten (Ua1, Ua2, ...) und die zweiten Aufbringeinheiten (Ub1, Ub2, ...) in unterschiedlichen vertikalen Positionen zu platzieren, so dass die kombinierte Aufbringung mit Überlappung der Schutzfolien auf jeder der Seitenflächen des Werkstücks der zu bedeckenden Höhe entspricht,
• nach und nach im Verlauf der horizontalen Bahn des Werkstücks mithilfe der ersten Aufbringeinheiten und der zweiten Aufbringeinheiten die Schutzfolien jeweils auf der ersten Seitenfläche und der zweiten Seitenfläche ausgehend von dem vorderen Saum (3'a) der zu bedeckenden Oberfläche und über die Länge der zu bedeckenden Oberfläche aufzubringen, um eine gleichzeitige Folierung der zwei Seitenflächen des Werkstücks sicherzustellen,
• und sukzessive entsprechend der horizontalen Bahn des Werkstücks mithilfe der ersten und zweiten Aufbringeinheiten die Schutzfolien an dem hinteren Saum der zu bedeckenden Länge abzuschneiden.

2. Verfahren nach dem vorhergehenden Anspruch, **dadurch gekennzeichnet, dass** es daraus besteht, für jede Aufbringeinheit eine Trommelwalze (T) zum Aufbringen einer Folie anzuordnen und jede Aufbring-Trommelwalze (T) einer ersten Einheit einer Aufbring-Trommelwalze einer zweiten Einheit gegenüberliegend zu positionieren.

3. Verfahren nach einem der vorhergehenden Ansprüche, **dadurch gekennzeichnet, dass** es daraus besteht:
• nach und nach im Verlauf der horizontalen Bahn des Werkstücks mithilfe der Aufbringeinheiten die Schutzfolien auf der Seitenfläche des Werkstücks ausgehend von dem vorderen Saum (3'a) von dem vorderen Rand (3a) des Werkstücks durch eine Spanne getrennt aufzubringen,
• und sukzessive entsprechend der horizontalen Bahn des Werkstücks mithilfe der Aufbringeinheiten die Schutzfolien an dem hinteren Saum (3'b) von dem hinteren Rand (3b) des Werkstücks durch eine Spanne getrennt abzuschneiden.

4. Verfahren nach einem der vorhergehenden Ansprüche, **dadurch gekennzeichnet, dass** es daraus besteht, die Bewegung des Werkstücks gemäß der horizontalen Bahn mithilfe von verschiedenen Systemen (D1, D2, D3) von Zwillingswalzen sicherzustellen, die auf beiden Seiten des Werkstücks angeordnet sind und jeder Aufbringeinheit nachgelagert und der letzten Aufbringeinheit, die auf der horizontalen Bahn des Werkstücks platziert ist, vorgelagert positioniert sind.

5. Verfahren nach einem der vorhergehenden Ansprüche, **dadurch gekennzeichnet, dass** es daraus besteht, jede Folie (5) nach ihrem Zuschnitt und bis zu ihrer Aufbringung auf das Werkstück durch elektrostatische Ladungen in Kontakt mit einer Aufbring-Trommelwalze zu halten.

6. Maschine zur Folierung eines flachen Werkstücks (3), das gemäß einer horizontalen Bahn bewegt wird und auf einer ersten und einer zweiten Seitenfläche eine zu bedeckende Oberfläche aufweist, die eine bestimmte zu bedeckende Höhe (H) zwischen einem oberen Rand (3i) und einem unteren Rand (3s) des Werkstücks sowie eine bestimmte zu bedeckende Länge (L) zwischen einem vorderen Rand (3a) und einem hinteren Rand (3b) des Werkstücks besitzt, die jeweils von einem vorderen Saum (3'a) und einem hinteren Saum (3'b) begrenzt wird, wobei die Maschine beinhaltet:
• ein Fördersystem (4) für ein zu folierendes Werkstück, in einer vertikalen gemäß einer horizontalen Bahn ausgerichteten Position,
• mehrere erste Einheiten zur Aufbringung (Ua1, Ua2, ...) von Folien, die in Reihe auf der horizontalen Bahn einer ersten Seitenfläche des Werkstücks angeordnet sind und jeweils vertikal durch ein Motorelement (16) bewegt werden, wobei jede erste Aufbringeinheit zumindest eine Trommelwalze (T) zum Aufbringen einer Folie beinhaltet, die in Annäherung bzw. Entfernung in Bezug auf das Werkstück durch ein motorisiertes Folierelement (13) bewegt wird, wobei ein Schneidmodul (9) zum Abschneiden der positionierten Folie an der Trommelwalze montiert ist,
• mehrere zweite Aufbringeinheiten (Ub1, Ub2, ...), die in Reihe auf der horizontalen Bahn der zweiten Seitenfläche des Werkstücks, jeweils einer ersten Aufbringeinheit, die auf der ersten Seitenfläche platziert ist, gegenüberliegend positioniert angeordnet sind, wobei jede zweite Aufbringeinheit vertikal durch ein Motorelement (16) bewegt wird und zumindest eine Trommelwalze (T) zum Aufbringen einer Folie beinhaltet, die in Annäherung bzw. Entfernung in Bezug auf das Werkstück durch ein motorisiertes Folierelement (13) bewegt wird, wobei ein Schneidmodul (9) zum Abschneiden der positionierten Folie an der Trommelwalze montiert ist,
• ein System zur Erfassung (20) der Positionen des vorderen Randes (3a), des hinteren Randes (3b) und des oberen Randes (3s) des Werkstücks in Bezug auf die Aufbring-Trommelwalzen (T),
• eine Berechnungs- und Steuereinheit (22), die mit dem Fördersystem (4), dem Erfassungssystem (20), den Motorelementen (16) zur Bewegung der Trommelwalzen (T) und den Schneidmodulen (9) verbunden ist, wobei diese Einheit (22) als Funktion der Höhe (H) der zu bedeckenden Oberfläche des Werkstücks und der Breiten der Folien die vertikale Position der Trommelwalzen (T) zum Aufbringen der Schutzfolien bestimmt, wobei diese Einheit (22) dazu konzipiert ist:
- die Motorelemente (16) der Trommelwalzen zu steuern, um die Trommelwalzen in solche vertikalen Positionen zu platzieren, dass die kombinierte Aufbringung mit Überlappung der Schutzfolien auf jeder der Seitenflächen des Werkstücks der Höhe (H) der zu bedeckenden Oberfläche entspricht,
- als Funktion der Position des vorderen Randes (3a) des Werkstücks die motorisierten Folierelemente (13) nach und nach im Verlauf der horizontalen Bahn des Werkstücks nacheinander so zu steuern, dass die Schutzfolien auf jeder Seitenfläche des Werkstücks ausgehend von dem vorderen Saum (3'a) der zu bedeckenden Oberfläche gleichzeitig aufgebracht werden,
- als Funktion der Position des hinteren Randes (3b) des Werkstücks die Schneidmodule (9) nach und nach im Verlauf der horizontalen Bahn des Werkstücks nacheinander so zu steuern, dass die Schutzfolien an dem hinteren Saum (3'b) der zu bedeckenden Oberfläche abgeschnitten werden.

7. Maschine nach Anspruch 6, **dadurch gekennzeichnet, dass** sie Übernahmesysteme (D1, D2, D3) beinhaltet, die insbesondere verschiedene Systeme von Zwillingswalzen beinhalten, die auf beiden Seiten des Werkstücks angeordnet sind und jedem Paar von Aufbringeinheiten vorgelagert und dem letzten Paar von Aufbringeinheiten, das auf der horizontalen Bahn des Werkstücks platziert ist, nachgelagert positioniert sind.

8. Maschine nach den Ansprüchen 6 oder 7, **dadurch gekennzeichnet, dass** jede Aufbringeinheit in Zuordnung zu jeder Aufbring-Trommelwalze (T) eine Leiste zur elektrostatischen Aufladung (11) beinhaltet, die gesteuert wird, um jede Folie nach ihrem Zuschnitt und bis zu ihrer Aufbringung auf das Werkstück in Kontakt mit einer Aufbring-Trommelwalze zu halten.

9. Maschine nach einem der Ansprüche 6 bis 8, **dadurch gekennzeichnet, dass** sie zumindest für ein Paar von Aufbringeinheiten, die gegenüberliegend angeordnet sind, ein Verriegelungssystem (15) beinhaltet, um eine Trommelwalze in der Position für die Aufbringung einer Folie quer zu blockieren.

## Claims

1. A method for laminating with protective films (**5**) deposited using application units, on a first (**3₁**) and a second (**3₂**) face of a flat part (**3**) moved along a horizontal path and each having a surface to be covered possessing a predetermined height to be covered determined between a lower edge (**3i**) and an upper edge (**3s**) of the part and a predetermined length (**L**) to be covered determined between a front edge (**3a**) and a rear edge (**3b**) of the part and respectively delimited by a front border (**3'a**) and a rear border (**3'b**), the method consisting:
• in disposing in series on the horizontal path of a first face of the part, several first application units (**Ua1, Ua2,** ...) and in series on the horizontal path of the second face of the part, several second application units (**Ub1, Ub2,** ...) each positioned facing a first application unit located on the first face;
• in placing the first application units (**Ua1, Ua2,** ...) and the second application units (**Ub1, Ub2,** ...) in different vertical positions such that the combined application with overlapping of the protective films on each of the faces of the part corresponds to the height to be covered;
• in gradually applying as the part travels along the horizontal path, using the first application units and the second application units, the protective films respectively to the first face and to the second face of the part, starting from the front border (**3'a**) of the surface to be covered and over the length of the surface to be covered to provide the simultaneous lamination of the two faces of the part;
• and in successively cutting out as a function of the horizontal path of the part, using the first and second application units, the protective films at the level of the rear border of the length to be covered.

2. The method as claimed in the preceding claim, **characterized in that** consists in disposing, for each application unit, a drum (**T**) for applying a film and in positioning each application drum (**T**) of a first unit facing an application drum of a second unit.

3. The method as claimed in one of the preceding claims, **characterized in that** it consists:
• in gradually applying as the part travels along the horizontal path, using the application units, the protective films to the face of the part, starting from the front border (**3'a**) separated from the front edge (**3a**) of the part, by a margin;
• and in successively cutting out as a function of the horizontal path of the part, using the application units, the protective films at the level of the rear border (**3'b**) separated from the rear edge (**3b**) of the part, by a margin.

4. The method as claimed in one of the preceding claims, **characterized in that** it consists in ensuring the movement of the part along the horizontal path using various systems (**D1, D2, D3**) of pairs of rollers disposed on either side of the part and positioned upstream of each application unit and downstream of the last application unit placed on the horizontal path of the part.

5. The method as claimed in one of the preceding claims, **characterized in that** it consists in holding, by electrostatic charge, each film (**5**) in contact with an application drum after its cutting-out and until its application to the part.

6. A machine for laminating a flat part (**3**) moved along a horizontal path and having on a first and a second face a surface to be covered possessing a predetermined height (**H**) to be covered determined between a lower edge (**3i**) and an upper edge (**3s**) of the part and a predetermined length L to be covered determined between a front edge (**3a**) and a rear edge (**3b**) of the part and respectively delimited by a front border (**3'a**) and a rear border (**3'**b), the machine including:
• a system (**4**) for conveying a part to be laminated, in a vertical standing position along a horizontal path;
• several first film application units (**Ua1, Ua2,** ...) disposed in series on the horizontal path of a first face of the part and each being vertically moved by a driving member (**16**), each first application unit including at least one drum (**T**) for applying a film moved toward and away from the part by a motor-driven laminating member (**13**), a cutting module (**9**) being mounted to cut out the film positioned on the drum;
• several second film application units (**Ub1, Ub2,** ...) disposed in series on the horizontal path of the second face of the part, each positioned facing a first application unit located on the first face, each second application unit being vertically moved by a driving member (**16**) and including at least one drum (**T**) for applying a film moved toward and away from the part by a motor-driven laminating member (**13**), a cutting module (**9**) being mounted for cutting out the film positioned on the drum;
• a system (**20**) for detecting the positions of the front edge (**3a**), the rear edge (**3b**) and the upper edge (**3s**) of the part with respect to the application drums (**T**);
• a computing and controlling unit (**22**) linked to the conveying system (**4**), the detecting system (**20**), the driving members (**16**) for moving the drums (**T**), and the cutting modules (**9**), this unit (**22**) determining as a function of the height (**H**) of the surface of the part to be covered and of the widths of the films, the vertical position of the drums (**T**) for applying the protective films, this unit (**22**) being designed for:
- controlling the driving members (**16**) of the drums to place the drums in vertical positions such that the combined application with overlapping of the protective films on each of the faces of the part corresponds to the height of the surface (**H**) to be covered;
- consecutively controlling, as a function of the position of the front edge (**3a**) of the part, the motor-driven laminating members (**13**), gradually as the part moves along the horizontal path, in such a way as to simultaneously apply the protective films to each face of the part, starting from the front border (**3'a**) of the surface to be covered;
- consecutively controlling, as a function of the position of the rear edge (**3b**) of the part, the cutting modules (**9**), gradually as the part moves along the horizontal path, in order to cut out the protective films at the level of the rear border (**3'b**) of the surface to be covered.

7. The machine as claimed in claim 6, **characterized in that** it includes take-up systems (**D1, D2, D3**) particularly including various systems of pairs of rollers disposed on either side of the part and positioned upstream of each pair of application units and downstream of the last pair of application units placed on the horizontal path of the part.

8. The machine as claimed in claims 6 or 7, **characterized in that** each application unit includes in association with each application drum (**T**), an electrostatic charging bar (**11**) controlled to hold each film in contact with an application drum after its cutting-out and until its application to the part.

9. The machine as claimed in one of the claims 6 to 8, **characterized in that** it includes for at least one pair of application units disposed facing one another, a locking system (**15**) for transversally locking a drum in the position of application of a film.
